# EUROPÄISCHE PATENTSCHRIFT

(11) **EP 1 816 346 B1**
(45) Veröffentlichungstag und Bekanntmachung des Hinweises auf die Patenterteilung: **11.12.2013**
(21) Anmeldenummer: 06016158.5
(22) Anmeldetag: 02.08.2006
(51) Int. Cl.: F03D 11/00

(54) **Stellantrieb zur Einstellung des Anstellwinkels eines Rotorblatts**
Blade pitch adjustment device for a wind turbine blade
Dispositif de réglage du pas de l'hélice pour éolienne

(30) Priorität: 07.10.2005 DE 202005015774 U
(43) Veröffentlichungstag der Anmeldung: 08.08.2007
(73) Patentinhaber: Liebherr-Components Biberach GmbH, 88400 Biberach/Riß (DE)
(72) Erfinder: Molllhagen, Klaus-Peter, 87700 Memmingen (DE)
(74) Vertreter: Thoma, Michael

(56) Entgegenhaltungen:
- DE-B3- 10 321 535
- DE-U1- 20 109 586
- FR-A- 1 541 597
- JP-A- 2005 233 055

## Beschreibung

Die vorliegende Erfindung betrifft einen Stellantrieb zur Einstellung des Anstellwinkels eines an einer Rotornabe drehbar gelagerten Rotorblatts einer Windkraftanlage, mit einem mit dem Rotorblatt verbindbaren ersten Antriebselement, einem mit dem genannten ersten Antriebselement in Verzahnungseingriff stehenden zweiten Antriebselement, sowie einer Schmiervorrichtung zur Schmierung der beiden Antriebselemente. Die Erfindung betrifft weiterhin einen Rotor mit einer Rotornabe, an dem zumindest ein Rotorblatt drehbar gelagert ist und durch einen Stellantrieb der vorgenannten Art in seinem Anstellwinkel einstellbar ist. Schließlich betrifft die Erfindung eine Windkraftanlage mit einem solchen Rotor sowie einem solchen Stellantrieb.

Bei Windkraftanlagen werden regelmäßig Rotoren eingesetzt, deren Rotorblätter an der Rotornabe drehbar gelagert sind, so dass der Anstellwinkel der Rotorblätter eingestellt werden kann. Die Rotorblätter können hierbei durch Großwälzlager um ihre Längsachse drehbar an der Rotornabe befestigt werden, so dass ein im Inneren der Rotornabe aufgenommener Stellantrieb den Anstellwinkel der Rotorblätter verändern kann. Hierzu werden z. B. sogenannte Pitch-Antriebe eingesetzt, wie sie beispielsweise die DE 200 17 994 U1 zeigt. Vorzugsweise wird die Antriebsbewegung eines Stellmotors über eine Getriebestufe auf das Rotorblatt übertragen. Vorteilhafterweise kann dabei das Rotorblatt direkt auf den Innenring des Großwälzlagers geflanscht sein, der als Drehkranz ausgebildet ist und eine Innenverzahnung aufweist, mit der ein im Inneren des Drehkranzes angeordnetes Antriebsritzel kämmt, das auf einer Antriebswelle sitzt.

Selbstverständlich müssen die Stellantriebe in solchen Rotoren von Windkraftanlagen geschmiert werden. Ein Beispiel für eine Schmiervorrichtung in dem Rotor einer Windkraftanlage zeigt beispielsweise die DE 200 21 026 U1. Ein Problem bei der Schmierung entsteht hierbei dadurch, dass der Anstellwinkel der Rotorblätter nicht oft verändert wird, da es über einen weiten Windbereich einen optimalen Anstellwinkel für die Rotorblätter gibt, so dass die Rotorblätter eigentlich nur dann verdreht werden, wenn der Wind zu stark ist oder die Anlage zum Zwecke der Wartung angehalten werden soll. Dies führt dazu, dass die Stellantriebe einen Großteil der Betriebszeit in derselben Stellung verharren und in der Getriebestufe des Stellantriebs immer dasselbe Zahnpaar der kämmenden Antriebselemente miteinander in Eingriff steht. Dabei kann der Schmierstoff verdrängt werden, so dass es an diesem Zahnpaar zu verstärktem Verschleiß kommt. Das Zahnpaar des Drehkranzes und des Antriebsritzels, das in der optimalen Anstellposition der Rotorblätter miteinander in Eingriff steht, wird oftmals auch als Null-Zahnpaar oder Null-Zahn bezeichnet. Diese Null-Zähne der Antriebselemente in den Windkraftanlagenrotoren erleiden an ihren Zahnflanken nach und nach Ausbrüche und zeigen nach geraumer Zeit starken Verschleiß. Die auftretenden Drehmomente aus dem Windangriff müssen immer an derselben Eingriffsstelle ertragen werden, wobei erschwerend noch Vibrationen und Schwingungen hinzukommen, die der Zahneingriff ebenfalls erleidet.

Zur Umgehung dieser Problematik wurde bereits vorgeschlagen, die miteinander kämmenden Antriebselemente nach einer Zeit zueinander zu versetzen, so dass sie in der Arbeitsstellung des Rotorblatts mit anderen Zähnen miteinander kämmen. Dies ist jedoch bei Windkraftanlagen bereits alleine aufgrund der gewaltigen Abmessungen der Anlage nicht ohne weiteres möglich. Eine Demontage des Rotorblatts ist äußerst aufwendig. Auch im Inneren der Rotornabe kann der Stellantrieb nicht ohne weiteres umgesetzt werden. Es wurde daher bereits angedacht, den miteinander kämmenden Antriebselementen ein Schmierrad zuzuordnen, das mit einem der Antriebselemente kämmt und auf dieses Schmiermittel überträgt. Dabei wird von Zeit zu Zeit der Stellantrieb in Gang gesetzt, um hierdurch die Schmierung sicherzustellen. Eine solche Ausbildung der Schmiervorrichtung ist jedoch sehr aufwendig. Zudem muss der Anstellwinkel der Rotorblätter zu ungewollten Zeitpunkten verändert werden.

Die DE 201 09 586 U1 schlägt ein Zahnradgetriebe mit einer Schmiervorrichtung vor, die ein Schmierstoff-Übertragungsritzel umfasst, das in seinen Zahnflanken mündende Schmierstoffkanäle aufweist, über die beim Kämmen mit einem anderen Getrieberitzelschmierstoff abgegeben werden kann. Die FR 15 41 597 A zeigt ebenfalls ein Getrieberitzel mit auf seinen Zahnflanken mündenden Schmierstoffkanälen. Die DE 103 21 535 B3 zeigt einen Verstellantrieb für den Anstellwinkel eines in einer Rotornabe drehbar gelagerten Rotorblatts, wobei ein an der Nabe des Rotors drehgelaqertes, mit dem Zahnkranz oder einem Antriebszahnrad kämmendes Schmierritzel vorgesehen ist, durch das bei einer Verstellung des Rotorblatts in eine Schmierstellung Schmierstoff auf ein Antriebszahnrad abgebbar ist.

Ferner zeigt die JP 2005/233055 A eine Getrieberadstufe für eine Windmühle, bei der eines der Zahnräder axial federvorgespannt ist, um Verschleiß durch Axialspiel zu reduzieren.

Der vorliegenden Erfindung liegt daher die Aufgabe zugrunde, einen verbesserten Stellantrieb, einen verbesserten Rotor und eine verbesserte Windkraftanlage der eingangs genannten Art zu schaffen, die Nachteile des Standes der Technik vermeiden und letzteren in vorteilhafter Weise weiterbilden. Vorzugsweise soll die Schmiervorrichtung dahingehend verbessert werden, dass die sogenannten NullGrad-Zähne in der Getriebestufe des Stellantriebs mit einfachen Mitteln ausreichend geschmiert werden können.

Diese Aufgabe wird erfindungsgemäß durch einen Stellantrieb gemäß Anspruch 1, einen Rotor gemäß Anspruch 16 sowie eine Windkraftanlage gemäß Anspruch 18 gelöst. Bevorzugte Ausgestaltungen der Erfindung sind Gegenstand der abhängigen Ansprüche.

Es wird also eine gezielte Schmierung der Null-Zähne der Getriebestufe des Stellantriebs vorgeschlagen, die vorteilhafterweise die Drehstellung der Antriebselemente der Getriebestufe zueinander berücksichtig. Der Null-Zahn beinhaltet mindestens einen Eingriffabschnitt des Antriebselements. Erfindungsgemäß besitzt die Schmiervorrichtung einen Schmiermittelkanal zur gezielten Schmiermittelzufuhr auf den Abschnitt des ersten Antriebselements und/oder den Abschnitt des damit kämmenden zweiten Antriebselements, die in der Arbeitsstellung des Rotorblatts miteinander in Eingriff stehen, sowie eine Zufuhrsteuereinrichtung zur Steuerung der Schmiermittelzufuhr durch den genannten Schmiermittelkanal in Abhängigkeit der Eingriffsstellung der beiden Antriebselemente bzw. der Drehstellung des Rotorblatts. Die Zufuhrsteuereinrichtung sorgt dafür, dass der Null-Zahn des ersten Antriebselements und/oder des zweiten Antriebselements nur dann geschmiert wird, wenn die beiden Antriebselemente zueinander hierfür in der richtigen Stellung sind. Insbesondere kann die Zufuhrsteuereinrichtung vorsehen, dass eine Schmierung nur dann erfolgt, wenn die beiden Null-Zähne der beiden Antriebselemente auch tatsächlich miteinander in Eingriff stehen und eine Schmierung nicht gerade dann erfolgt, wenn beispielsweise bei zu starkem Wind die Rotorblätter aus dem Wind gedreht sind.

Die Zufuhrsteuereinrichtung kann hierzu einen Freischalter besitzen, der die Schmiermittelzufuhr freischaltet, wenn die genannten beiden Antriebselemente mit den Abschnitten in Eingriff stehen, mit denen sie in der Arbeitsstellung des Rotorblatts miteinander kämmen, und der die Schmiermittelzufuhr sperrt, wenn diese beiden Antriebselementeabschnitte außer Eingriff sind. Die Zufuhrsteuereinrichtung stellt die Schmiermittelzufuhr sozusagen scharf, was nicht bedeutet, dass dann, wenn die Rotorblätter in ihrer Arbeitsstellung stehen und die Null-Zähne miteinander in Eingriff stehen, ständig Schmiermittel zugeführt werden muss. Der genannten prinzipiellen Freischaltung der Schmiermittelzufuhr kann selbstverständlich eine Zeittaktsteuerung, eine Zeitablaufsteuerung oder ähnliches überlagert sein, so dass beispielsweise in vorbestimmten Zeitabständen Schmiermittel nachgeführt wird, dies jedoch nur dann, wenn die Null-Zähne tatsächlich miteinander in Eingriff stehen.

Erfindungsgemäß ist zur Schmiermittelzufuhrsteuerung in dem vorgenannten Schmiermittelkanal ein Ventil vorgesehen sein, welches insbesondere in dem Mündungsbereich des Schmiermittelkanals angeordnet sein kann. Das Ventil ist dabei derart ausgebildet, dass es in Abhängigkeit der Eingriffsstellung der beiden zu schmierenden Antriebselemente betätigbar ist, insbesondere dann geöffnet ist, wenn die zu schmierenden Antriebselementeabschnitte miteinander in Eingriff stehen und geschlossen ist, wenn diese beiden Antriebselementeabschnitte außer Eingriff sind.

Erfindungsgemäß weist das Ventil einen mechanischen Ventilöffner auf, der zwischen einer Öffnungsstellung und einer Schließstellung bewegbar ist und im Bereich der Mündung des Schmiermittelkanals vorspringt, so dass er durch Eindrücken das Ventil öffnet. Insbesondere ist der Ventilöffner derart an dem einen Antriebselement angeordnet, dass er von dem anderen Antriebselement betätigt wird, wenn dieses andere Antriebselement mit dem entsprechenden Abschnitt mit dem erstgenannten Antriebselement kämmt.

Die vorgenannte Ausbildung des Ventils mit einem mechanischen Ventilöffner ist einfach vorzusehen und arbeitet vollständig störungsfrei, da das Ventil zwangsweise dann betätigt wird, wenn die Antriebselemente mit ihren Null-Zähnen miteinander kämmen. Vorzugsweise wird der Ventilöffner durch einen der Null-Zähne der Antriebselemente betätigt.

Dabei kann nach einer vorteilhaften Ausführung der Erfindung in dem Schmiermittelkanal ein Absperrventil ggf. in Form eines Rückschlagventils vorgesehen sein, dass durch den in dem Schmiermittelkanal herrschenden Schmiermitteldruck geschlossen wird. Der Ventilöffner ist an dem Rückschlagkörper vorgesehen und erstreckt sich aus der Mündung des Schmiermittelkanals heraus, so dass durch Eindrücken des Ventilöffners der Rückschlagkörper gegen den Schmiermitteldruck aufmacht.

Der Schmiermittelkanal kann grundsätzlich auf verschiedenen Wegen zu den zu schmierenden Abschnitten bzw. Sektoren der Antriebselemente geführt sein. Wird die zu schmierende Getriebestufe von einem Antriebsritzel und einem mit dem Rotor verbindbaren Drehkranz gebildet, besteht eine besonders vorteilhafte Ausführung der Erfindung darin, dass der Schmiermittelkanal durch das Antriebsritzel hindurch geführt ist und an dessen Null-Zahn mündet, wobei die Mündung in einem Zahnfußbereich, aber auch in einem Zahnkopfbereich, vorgesehen sein kann. Bevorzugt ist eine Mündung im Zahnfußbereich, da hierdurch der Zahn selbst durch die Schmiermittelbohrung nicht geschwächt wird.

Vorzugsweise erstreckt sich der Schmiermittelkanal in dem Antriebsritzel radial nach außen und mündet im Zahnfußbereich des Zahnes, der in der Arbeitsstellung des Rotorblatts mit einem Zahn des Drehkranzes kämmt. Der Schmiermittelkanal wird hierbei von einem Schmiermittelanschluss aus gespeist, der über eine zentrale Drehdurchführung im Inneren des Antriebsritzels mit dem Schmiermittelkanal in Verbindung steht. Vorzugsweise kann der Schmiermittelanschluss dabei stirnseitig auf dem Antriebsritzel angeordnet sein. Alternativ kann der Schmiermittelkanal auch in die Antriebswelle hineingeführt sein, auf der das Antriebsritzel sitzt. Der Schmiermittelanschluss kann in diesem Falle vorteilhafterweise auf einem Antriebswellenlagergehäuse sitzen, so dass die Schmierung durch einen Lagerbereich für die Antriebswelle hindurch erfolgt. Das Schmiermittel wird sozusagen in das Lagergehäuse hineingedrückt, kann dort die Antriebswellenlager schmieren und tritt in die Antriebswelle ein, in der das Schmiermittel über den vorgenannten Schmiermittelkanal hindurch gezielt auf den zu schmierenden Null-Zahn geführt wird.

Alternativ oder zusätzlich zu einer Schmiermittelzufuhr durch das Antriebsritzel hindurch kann die Schmiermittelzufuhr auch durch den Drehkranz hindurch erfolgen. In diesem Fall erstreckt sich der Schmiermittelkanal vorzugsweise radial durch den Drehkranz hindurch und mündet im Bereich des Null-Zahnes der Verzahnung des Drehkranzes, der in der bevorzugten Arbeitsstellung des Rotorblatts mit dem Antriebsritzel in Eingriff steht. Auch hier kann der Mündungsbereich des Schmiermittelkanals grundsätzlich sowohl im Zahnfuß- als auch im Zahnkopfbereich angeordnet sein, wobei jedoch auch hier eine Mündung im Zahnfußbereich aus den genannten Gründen bevorzugt ist.

Bildet nach einer vorteilhaften Ausführung der Erfindung der Drehkranz einen Lagerring eines Großwälzlagers, mittels dessen das Rotorblatt an der Rotornabe gelagert ist, ist der Schmiermittelkanal vorzugsweise auch durch den zweiten Lagerring des Großwälzlagers hindurchgeführt, an dem der Drehkranz gelagert ist. Die Schmiermittelzuführung kann hierbei durch den Wälzkörperkäfig hindurchgeführt sein, so dass gleichzeitig die Wälzkörper des Großwälzlagers geschmiert werden. Eine besondere Ausführung kann auch darin bestehen, dass der Schmiermittelkanal durch die beiden Lagerringe derart hindurchgeführt ist, dass die beiden Kanalabschnitte nur dann miteinander kommunizieren, wenn sie sich in einer bestimmten Stellung der Lagerringe zueinander überdecken. Hierdurch kann ggf. das zuvor beschriebene Ventil eingespart werden. Wird der Schmiermittelkanal nämlich derart durch den äußeren Lagerring geführt, dass er mit dem Schmiermittelkanalabschnitt in dem inneren Lagerring nur dann kommuniziert, wenn das Rotorblatt in der bevorzugten Arbeitsstellung ist, steuert sich die Schmiermittelzufuhr sozusagen von selbst.

Alternativ oder zusätzlich zu einer solchen Schmiermittelzufuhr durch das Rotorblattlager kann das Schmiermittel auch seitlich bzw. stirnseitig auf das kämmende Antriebselementepaar geführt werden. Der Schmiermittelkanal kann sich hierzu beispielsweise durch eine Wandung der Rotornabe oder insbesondere durch das Antriebswellenlagergehäuse hindurcherstrecken und eine Mündung besitzen, die stirnseitig an dem Eingriffsbereich der beiden kämmenden Antriebselemente der Getriebestufe liegt. Wird in der zuvor beschriebenen Weise ein Ventil mit einem vorstehenden Ventilöffner in dem Schmiermittelkanal vorgesehen, ist an dem zu schmierenden Null-Zahn des einen oder des anderen Antriebsritzels ein Betätiger in Form eines vorspringenden Betätigungsnockens vorgesehen, der den Ventilöffner niederdrückt und hierdurch die Schmiermittelzufuhr freischaltet, wenn die Eingriffsstellung der Null-Zähne der beiden Antriebselemente vorliegt.

Die Erfindung wird nachfolgend anhand bevorzugter Ausführungsformen und zugehöriger Zeichnungen näher erläutert. In den Zeichnungen zeigen:
- Fig. 1:: eine perspektivische Teilansicht einer Windkraftanlage, bei der die auf einem Turm gelagerte Gondel der Windkraftanlage im Teilschnitt und der daran gezeigte Rotor mit den Rotorblättern gezeigt ist,
- Fig. 2:: einen Schnitt durch den in der Rotornabe der Windkraftanlage aus Fig. 1 angeordneten Stellantrieb zur Einstellung des Anstellwinkels der Rotor-blätter der Windkraftanlage aus Fig. 1 , bei der die Null-Zähne der Getriebestufe durch eine Schmiermittelzufuhr durch das Antriebsritzel hindurch erfolgt,
- Fig. 3:: eine vergrößerte Darstellung des Schmiermittelkanals und des darin angeordneten Ventils in dem Antriebsritzel des Stellantriebs aus Fig. 2,
- Fig. 4:: einen Schnitt durch einen Stellantrieb zur Einstellung des Rotorblattan-stellwinkels nach einer weiteren Ausführung der Erfindung, bei der ein Schmiermittelkanal in dem Antriebsritzel über einen Schmiermittelkanal in der Antriebswelle und durch ein Antriebswellenlagergehäuse hindurch gespeist wird,
- Fig. 5:: eine vergrößerte Schnittansicht der Antriebswelle und des Antriebswellenlagergehäuses aus Fig. 4, die die Zuführung des Schmiermittels über die Antriebswelle zeigt,
- Fig. 6:: einen Schnitt eines Stellantriebs zur Einstellung des Rotorblattanstell-winkels nach einer weiteren bevorzugten Ausführung der Erfindung, bei der die Null-Zähne der zu schmierenden Getriebestufe über einen Schmiermittelkanal in dem Antriebswellenlagergehäuse geschmiert werden und das Schmiermittel stirnseitig auf das Antriebsritzel und den damit kämmenden Drehkranz geführt wird,

- Fig. 7:: eine vergrößerte Schnittansicht des Schmiermittelkanals und des darin angeordneten Ventils in dem Antriebswellenlagergehäuse aus Fig. 6,
- Fig. 8:: einen Schnitt eines Stellantriebs zur Einstellung des Rotorblattanstellwinkels nach einer weiteren Ausführung der Erfindung, bei der die Null-Zähne der zu schmierenden Getriebestufe über einen Schmiermittelkanal durch das das Rotorblatt tragende Großwälzlager hindurch erfolgt,
- Fig. 9:: eine vergrößerte Schnittansicht des Schmiermittelkanals durch die Lagerringe des Wälzlagers aus Fig. 8, und
- Fig. 10:: einen Querschnitt durch das Antriebsritzel mit darin eingebrachtem Schmiermittelkanal beispielsweise nach Fig. 2, der die Mündung des Schmiermittelkanals im Zahnfuß zeigt.

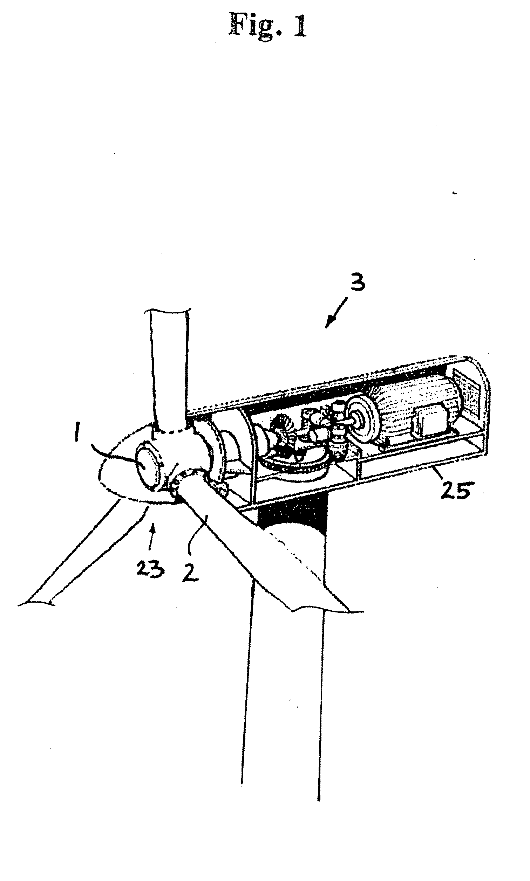

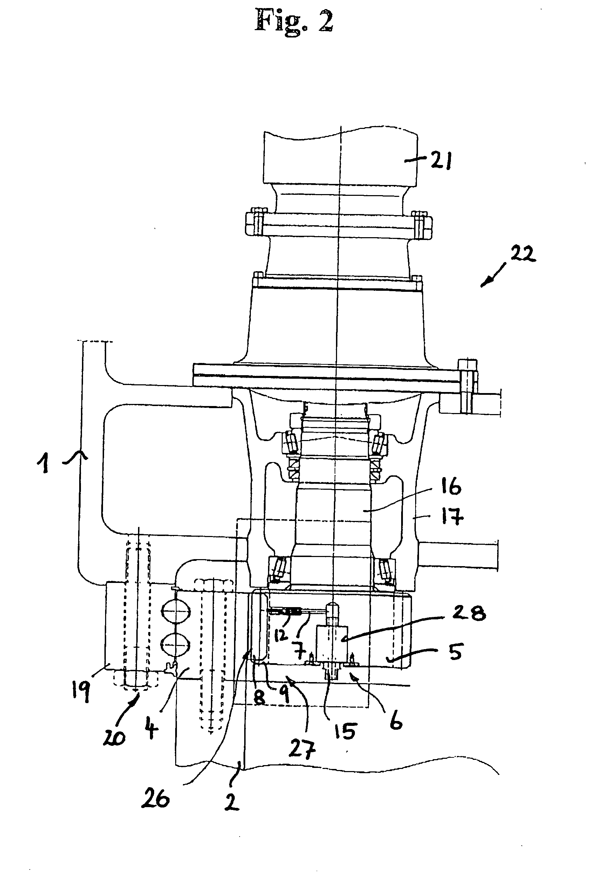

Die in Figur 1 schematisch dargestellte Windkraftanlage 3 umfasst in an sich bekannter Weise eine auf einem Mast bzw. Turm 24 um eine aufrechte Achse drehbar angeordnete Gondel 25, an der der Rotor 23 um eine liegende Achse drehbar gelagert ist, um einen Generator anzutreiben. Der Rotor 23 umfasst dabei in an sich bekannter Weise eine Rotornabe 1, die um die genannte liegende Achse drehbar gelagert ist und mehrere, in der gezeichneten Ausführung drei Rotorblätter 2 trägt, die radial abstehend an der Rotornabe 1 gelagert sind. Dir Rotorblätter 2 können dabei relativ zu der Rotornabe 1 um ihre Längsachse verdreht werden, um den Anstellwinkel der Rotorblätter 2 verändern zu können. Hierzu ist für jedes der Rotorblätter 2 im Inneren der Rotornabe 1 ein Stellantrieb 22 vorgesehen, wie ihn Figur 2 zeigt. Der Stellantrieb 22 umfasst dabei einen Stellmotor 21, der als Elektromotor ausgebildet sein kann und an einer Wandung der Rotornabe 1 angeflanscht ist (vgl. Figur 2). Der Stellmotor 21 treibt dabei über eine Antriebswelle 16 ein stirnseitig auf der Antriebswelle 16 sitzendes Antriebsritzel 5 an, wobei die Rotationsachse der Antriebswelle 16 und des Antriebsritzels 5 parallel zur Rotorblattverstellachse angeordnet sind.

Das jeweilige Rotorblatt 2 ist über ein Großwälzlager 20 an der Rotornabe 1 befestigt. Wie Figur 2 zeigt, ist in der gezeichneten Ausführung der äußere Lagerring 19 des Wälzlagers 20 an die Rotornabe 1 geflanscht und dort mit Schrauben befestigt. Der innere, drehbare Lagerring des Wälzlagers 20 trägt das Rotorblatt 2, welches stirnseitig an den Lagerring geflanscht und dort ebenfalls über Schrauben fixiert ist.

Der genannte Lagerring des Lagers 20 bildet dabei einen Drehkranz (4) mit einer Innenverzahnung 26, die mit dem vorgenannten Antriebsritzel 5 kämmt. Wird das Antriebsritzel 5 von dem Stellmotor 21 gedreht, wird dies in eine entsprechende Änderung des Anstellwinkels des Rotorblatts 2 umgesetzt.

Wie Figur 2 weiterhin zeigt, ist die Antriebswelle 16 des Stellantriebs 22 über ein Antriebswellenlagergehäuse 17 an der Rotornabe 1 abgestützt. Wie Figur 2 zeigt, ist die Antriebswelle 16 an dem Antriebswellenlagergehäuse 17 über Wälzlager in geeigneter Weise abgestützt, wie dies Figur 2 zeigt.

Zur Schmierung der von dem Antriebsritzel 5 und dem Drehkranz 4 gebildeten Getriebestufe 27 ist eine Schmiervorrichtung 6 vorgesehen, über die Schmiermittel gezielt auf die Null-Zähne des Antriebsritzels 5 und des Drehkranzes 4 geführt werden kann. Diese sogenannten Null-Zähne 8 und 9 sind die Zähne des Antriebsritzels 5 bzw. des Drehkranzes 4, die miteinander in Eingriff stehen, wenn das Rotorblatt 2 für normale Windbedingungen in seine optimale Anstellwinkelstellung gedreht ist.

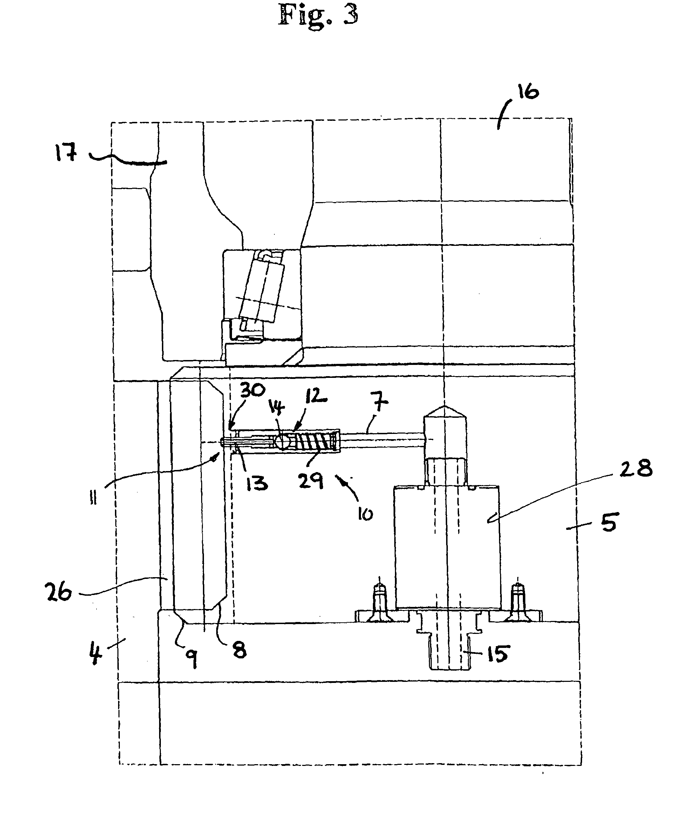

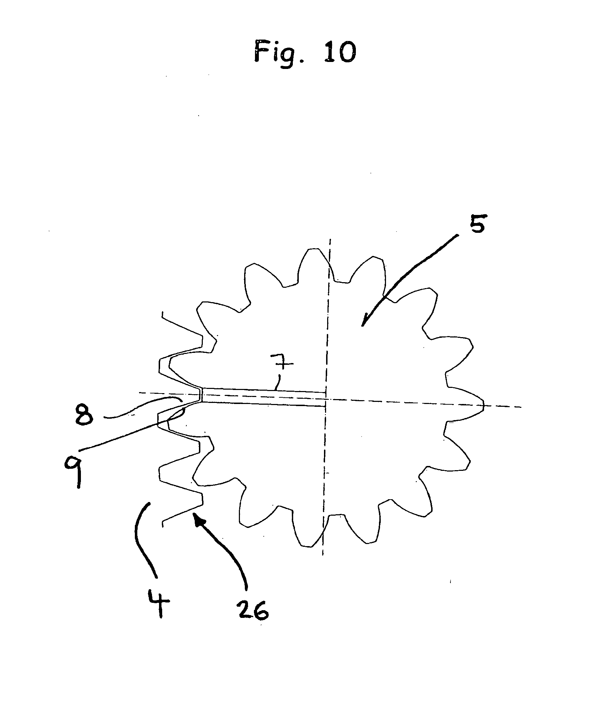

In der Ausführung nach den Figuren 2 und 3 umfasst die Schmiervorrichtung 6 einen auf der Stirnseite des Antriebsritzels 5 vorgesehenen Schmiermittelanschluss 15, der über eine Drehdurchführung 28, die sich koaxial in das Antriebsritzel 5 hineinerstreckt, mit einem Schmiermittelkanal 7 kommuniziert, der sich im Inneren des Antriebsritzels 5 radial nach außen erstreckt. Der Schmiermittelkanal 7 mündet dabei im Zahnfußbereich des vorgenannten Null-Zahnes, wie dies Figur 10 zeigt.

Die Schmiermittelzufuhr über den Schmiermittelkanal 7 wird von einer Zufuhrsteuereinrichtung 10 gesteuert, die über einen Freischalter 11 die Schmiermittelzufuhr freischaltet immer dann, wenn die Null-Zähne des Antriebsritzels 5 und des Drehkranzes 4 miteinander in Eingriff stehen bzw. das Rotorblatt 2 seine optimale Anstellwinkelstellung einnimmt. Konkret ist hierfür ein Ventil 12 in dem Schmiermittelkanal 7 angeordnet, das nach Art eines Rückschlagventils einen Absperrkörper 14 umfasst, der über eine Feder 29 in seine Schließstellung vorgespannt ist (vgl. Figur 3), wobei der Ventilkörper 14 das Ventil schließt, wenn er auf die Mündung 30 des Schmiermittelkanals 7 zu bewegt wird.

Um das Ventil 12 zu öffnen, ist als Ventilöffner 13 ein Ventilstößel vorgesehen, das stangenförmig ausgebildet ist und sich von dem Ventilkörper 14 weg durch den Schmiermittelkanal 7 hindurch bis zu dessen Mündung 30 erstreckt. Wie Figur 3 zeigt, steht das Ventilstößel 13 leicht über die Mündung 30 des Schmiermittelkanals 7 im Zahnfußbereich des Antriebsritzels 5 über, so dass durch Eindrücken des Ventilstößels 13 das Ventil 12 öffnet, d.h. der Ventilkörper 14 aus seiner Schließstellung entgegen der Federkraft in die Öffnungsstellung gedrückt wird. Dies tritt immer dann ein, wenn der Null-Zahn 8 des Drehkranzes 4 mit dem Null-Zahn 9 des Antriebsritzels 5 kämmt, d.h. in den entsprechenden Zahnfußbereich des Antriebsritzels 5 eingreift, wie dies Figur 10 zeigt.

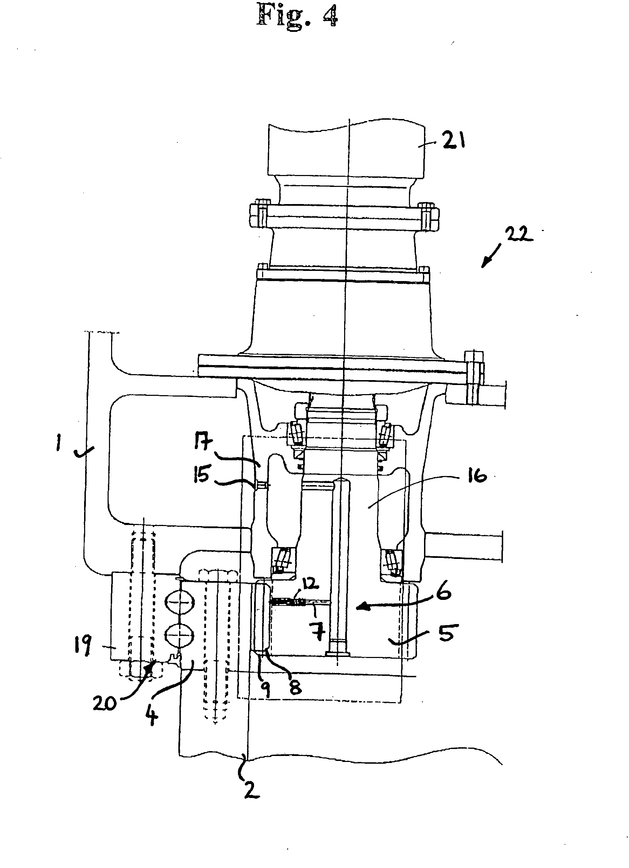

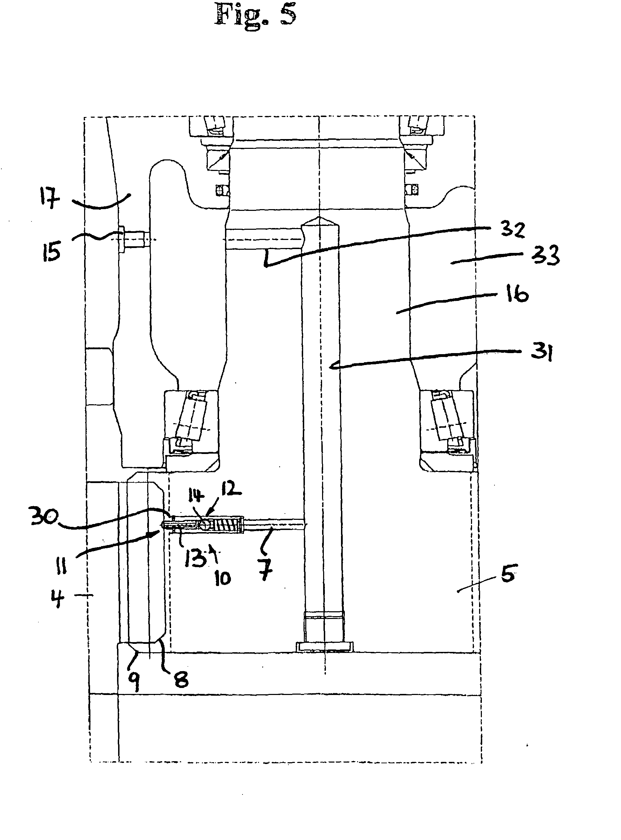

Die Figuren 4 und 5 zeigen grundsätzlich eine ähnliche Ausbildung der Schmiervorrichtung 6. Auch hier erfolgt die Schmiermittelzufuhr durch das Antriebsritzel 5 hindurch über einen dort radial ausgebildeten Schmiermittelkanal 7. Es sind insofern für sich entsprechende Bauteile entsprechende Bezugsziffern vergeben. Abweichend von der zuvor beschriebenen Ausführung erfolgt jedoch hier die Schmiermittelzufuhr nicht von der Stirnseite des Antriebsritzels 5 her, sondern durch die Antriebswelle 16 hindurch von einem an dem Antriebswellenlagergehäuse 17 vorgesehenen Schmiermittelanschluss 15. Wie die Figuren 4 und 5 zeigen, kommuniziert der radiale Schmiermittelkanal 7 mit einer axialen Schmiermittelbohrung 31 im Inneren der Antriebswelle 16, die an ihrem dem Antriebsritzel 5 abgewandten Ende durch die radiale Bohrung 32 aus der Antriebswelle 16 herausgeführt ist und dort in einen Antriebswellenlagergehäuseinnenraum 33 mündet. Durch den Schmiermittelanschluss 15 kann von der Außenseite des Antriebswellenlagergehäuses 17 Schmiermittel in den genannten Innenraum 33 hineingedrückt werden, so dass gleichzeitig die Lager der Antriebswelle 16 geschmiert werden. In dem Innenraum 33 sind auch die Lager für die Antriebswelle 16 angeordnet. Die radiale Bohrung 32 kommuniziert mit diesem Innenraum und erlaubt es somit, Schmiermittel bis in den Schmiermittelkanal 7 und über diesen an die Null-Zähne 8 und 9 zu führen.

Wie Figur 5 zeigt, kann die Schmiermittelbohrung 31 von der Stirnseite der Antriebswelle 16 her eingebracht sein und dort über einen Stöpsel verschlossen sein.

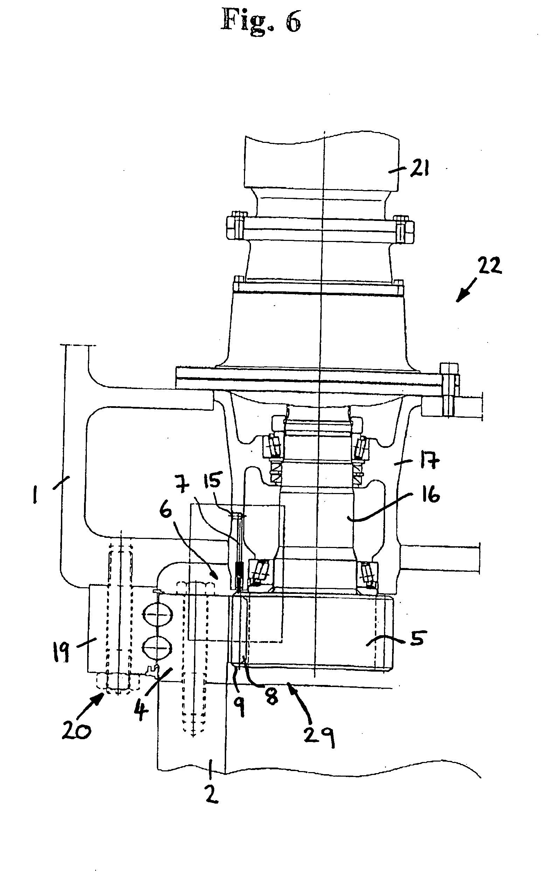

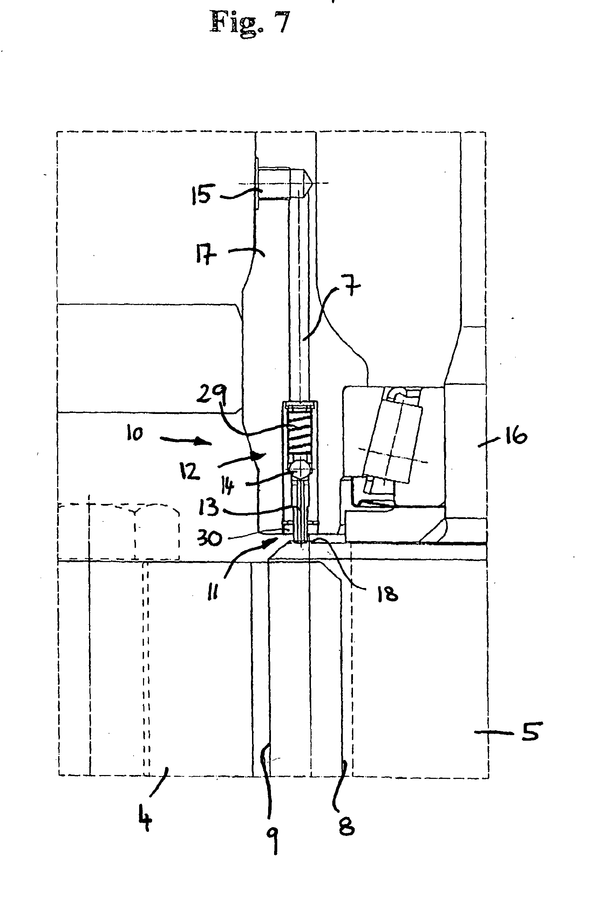

Anstelle der in den vorhergehenden Figuren erfolgenden Schmiermittelzuführung durch das Antriebsritzel 5 hindurch kann das Schmiermittel auch von außen her stirnseitig auf die miteinander kämmenden Null-Zähne 8 und 9 des Drehkranzes 4 bzw. des Antriebsritzels 5 geführt werden. Eine solche Ausführung zeigen die Figuren 6 und 7. Der Schmiermittelkanal 7 erstreckt sich hier in der gezeichneten Ausführung in dem Antriebswellenlagergehäuse 17, in dem die Antriebswelle 16 aufgenommen ist. Der Schmiermittelkanal 7 erstreckt sich dabei im wesentlichen parallel zu der Drehachse des Antriebsritzels 5 bzw. der Antriebswelle 16 und mündet auf den Eingriffsabschnitt, in dem das Antriebsritzel 5 mit dem Drehkranz 4 kämmt. Die Mündung 30 ist dabei an der Stirnseite des Antriebswellenlagergehäuses 17 vorgesehen und wird von den Zähnen des Antriebsritzels 5 überdeckt.

Auch in der Ausführung nach Figur 6 ist in dem Schmiermittelkanal 7 die zuvor beschriebene Ventilanordnung mit dem vorstehenden Ventilstößel 13 vorgesehen. Um das Ventil 12 jedoch nur dann zu öffnen, wenn die zuvor beschriebenen Null-Zähne 8 und 9 des Antriebsritzels 5 und des Drehkranzes 4 miteinander kämmen, trägt der Null-Zahn 9 des Antriebsritzels 5 einen stirnseitigen Vorsprung, der einen Betätigungsnocken 18 bildet, durch den das Ventilstößel 13 eingedrückt und das Ventil 12 geöffnet wird. Die anderen Zähne des Antriebsritzels 5 tragen einen solchen Betätigungsnocken 18 nicht, so dass das Ventil 12 nur dann aufmacht, wenn die Null-Zähne 8 und 9 miteinander kämmen und dementsprechend an der Mündung des Schmiermittelkanals 7 liegen.

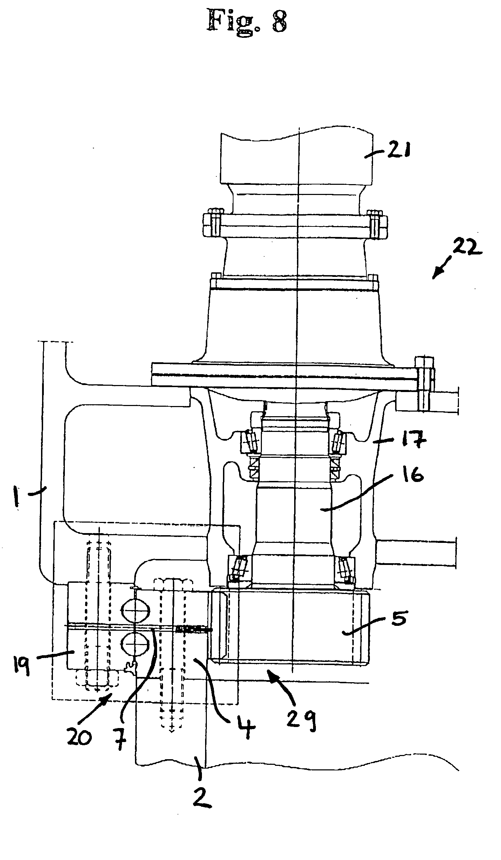

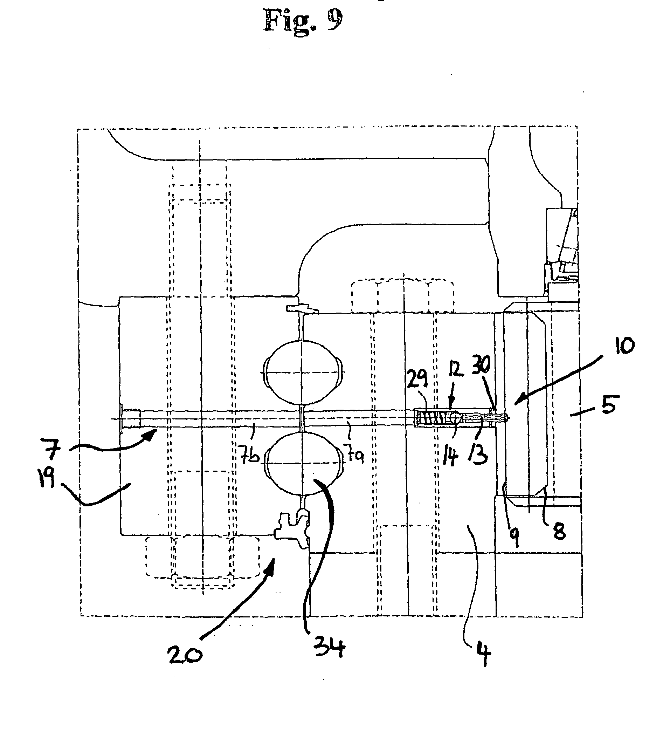

Eine weitere Ausführung der Schmiervorrichtung 6 zeigen die Figuren 8 und 9, wobei auch hier für sich entsprechende Bauteile dieselben Bezugsziffern wie in den vorhergehenden Ausführungen vergeben sind. Die Schmiermittelzufuhr erfolgt hier durch das Drehlager 20 und insbesondere durch den Drehkranz 4 hindurch. Der Schmiermittelkanal 7 erstreckt sich hierbei radial durch die beiden Lagerringe 19 und 4 hindurch und mündet im Zahnfuß des Null-Zahnes 8 des Drehkranzes 4, wobei auch hier in entsprechender Art und Weise das Ventil 12 mit dem vorstehenden Ventilöffner 13 vorgesehen ist. Interessant ist hierbei, dass sich der Schmiermittelkanal 7 in die Abschnitte 7a und 7b aufteilt, die einerseits in dem Drehkranz 4 und andererseits in dem stehenden Lagerring 19 ausgebildet sind. Die Schmiermittelzufuhr ist deshalb nur dann möglich, wenn die Schmiermittelkanalabschnitte 7a und 7b zur Überdeckung kommen und miteinander fluchten, was immer dann der Fall ist, wenn der Drehkranz 4 die Stellung einnimmt, in der sein Null-Zahn 8 mit dem Null-Zahn 9 des Antriebsritzels 5 kämmt, d.h. das Rotorblatt 2 in seiner optimalen Anstellwinkelstellung ist. Gegebenenfalls könnte bei dieser Ausbildung auf das Ventil 12 sogar verzichtet werden, da in anderen Stellungen die beiden Kanalabschnitte 7a und 7b nicht miteinander fluchten und insofern keine Schmiermittelzufuhr erfolgen kann. Hierzu müsste lediglich der Übergang von dem Drehkranz 4 zum Lagerring 19 im Bereich der Kanalabschnitte 7a und 7b entsprechend dichtend sein. Andererseits ist der genannte Übergangsbereich vorteilhafterweise im Bereich der Wälzkörper 34 des Lagers 20, so dass über den Lagerspalt zwischen den beiden Lagerringen eine Schmierung der Wälzkörper 34 erreicht werden kann.

## Patentansprüche

1. Stellantrieb zur Einstellung des Anstellwinkels eines an einer Rotornabe (1) drehbar gelagerten Rotorblatts (2) einer Windkraftanlage (3), mit einem mit dem Rotorblatt (2) verbindbaren ersten Antriebselement (4), einem mit dem ersten Antriebselement (4) in Verzahnungseingriff stehenden zweiten Antriebselement (5), sowie einer Schmiervorrichtung (6) zur Schmierung der beiden Antriebselemente (4, 5), wobei die Schmiervorrichtung (6) einen Schmiermittelkanal (7) zur gezielten Schmiermittelzufuhr auf einen Null-Zahn (8) des ersten Antriebselements (4) und/oder einen Null-Zahn (9) des zweiten Antriebselements (5), die dann miteinander in Eingriff stehen, wenn das Rotorblatt (2) in seiner bevorzugten Arbeitsstellung ist, sowie eine Zufuhrsteuereinrichtung (10) mit einem Ventil (12) in dem Schmiermittelkanal (7) zur Steuerung der Schmiermittelzufuhr durch den Schmiermittelkanal (7) in Abhängigkeit der Eingriffsstellung der beiden Antriebselemente (4, 5) aufweist, **dadurch gekennzeichnet, dass** das Ventil (12) einen Ventilöffner (13) aufweist, der zwischen einer Öffnungsstellung und einer Schließstellung bewegbar ist und im Bereich der Mündung des Schmiermittelkanals (7) vorspringt, wobei zumindest an einem der genannten Null-Zähne (8, 9) der beiden Antriebselemente (4, 5) ein Betätigungsnocken (18) zum Öffnen des Ventils (12) vorgesehen ist.

2. Stellantrieb nach dem vorhergehenden Anspruch, wobei die Zufuhrsteuereinrichtung (10) einen Freischalter (11) aufweist, der die Schmiermittelzufuhr durch den Schmiermittelkanal (7) freischaltet, wenn die genannten beiden Antriebselemente (4, 5) mit ihren genannten Null-Zähne (8, 9) miteinander in Eingriff stehen, und die Schmiermittelzufuhr durch den Schmiermittelkanal (7) sperrt, wenn die genannten beiden Null-Zähne (8, 9) außer Eingriff sind.

3. Stellantrieb nach einem der vorhergehenden Ansprüche, wobei der Ventilöffner (13) einen Ventilstößel aufweist, der sich in dem Schmiermittelkanal (7) erstreckt und aus diesem vorspringt und durch Eindrücken in den Schmiermittelkanal (7) das Ventil (12) öffnet.

4. Stellantrieb nach einem der vorhergehenden Ansprüche, wobei das Ventil (12) als Rückschlagventil ausgebildet ist, dessen Rückschlagkörper (14) von dem Schmiermitteldruck in dem Schmiermittelkanal (7) zur Schließstellung des Ventils hin beaufschlagt wird.

5. Stellantrieb nach einem der vorhergehenden Ansprüche, wobei der Schmiermittelkanal (7) in einem Zahnfuß des ersten und/oder zweiten Antriebselements (4, 5) mündet.

6. Stellantrieb nach einem der vorhergehenden Ansprüche, wobei der Schmiermittelkanal (7) durch das zweite Antriebselement (5) hindurchgeführt ist und/oder die Zufuhrsteuereinrichtung (10, 12) in dem zweiten Antriebselement (5) angeordnet ist.

7. Stellantrieb nach dem vorhergehenden Anspruch, wobei der Schmiermittelkanal (7) mit einem Schmiermittelanschluss (15) in Strömungsverbindung bringbar ist, der stirnseitig an dem zweiten Antriebselement (5) angeordnet ist.

8. Stellantrieb nach einem der beiden vorhergehenden Ansprüche, wobei der Schmiermittelkanal (7) mit einem Schmiermittelanschluss (15) in Strömungsverbindung bringbar ist, der an einer Antriebswelle (16) und/oder einem Antriebswellengehäuse (17) vorgesehen ist.

9. Stellantrieb nach dem vorhergehenden Anspruch, wobei der Schmiermittelkanal (7) durch eine Antriebswelle (16) hindurchgeführt ist und mit einem Antriebswellengehäuseinnenraum kommuniziert, in dem Lager zur Lagerung der Antriebswelle (16) aufgenommen sind.

10. Stellantrieb nach einem der vorhergehenden Ansprüche, wobei der Schmiermittelkanal (7) durch ein Antriebswellenlagergehäuse (17) oder die Rotornabe (1) hindurchgeführt ist und/oder stirnseitig auf die Verzahnung der beiden Antriebselemente (4, 5) mündet.

11. Stellantrieb nach einem der vorhergehenden Ansprüche, wobei der Schmiermittelkanal (7) durch das erste Antriebselement (4) und/oder ein das erste Antriebselement (4) lagerndes Lagerteil (19) hindurchgeführt ist.

12. Stellantrieb nach dem vorhergehenden Anspruch, wobei der Schmiermittelkanal (7) durch das erste Antriebselement (4) und den Lagerring (19) derart hindurchgeführt ist, dass die entsprechenden Schmiermittelkanalabschnitte (7a, 7b) nur in einer Drehstellung des ersten Antriebselements (4) relativ zu dem Lagerteil (19) miteinander in Strömungsverbindung stehen.

13. Stellantrieb nach einem der vorhergehenden Ansprüche, wobei das erste Antriebselement (4) ein Drehkranz und das zweite Antriebselement (5) ein sich innerhalb des Drehkranzes erstreckendes Antriebsritzel ist.

14. Stellantrieb nach einem der vorhergehenden Ansprüche, wobei das erste Antriebselement (4) einen Lagerring eines Drehlagers (20) bildet, durch das das Rotorblatt (2) an der Rotornabe (1) lagerbar ist, wobei insbesondere das erste Antriebselement (4) den Innenring des Drehlagers (20) bildet und eine Innenverzahnung aufweist, mit der das zweite Antriebselement (5) kämmt.

15. Stellantrieb nach einem der vorhergehenden Ansprüche, wobei das zweite Antriebselement (5) auf einer Antriebswelle sitzt, die mit einem Stellmotor (21) verbindbar ist und/oder dessen Motorwelle bildet.

16. Rotor für eine Windkraftanlage (3) mit einem Stellantrieb (22) nach einem der vorhergehenden Ansprüche.

17. Rotor nach dem vorhergehenden Anspruch, wobei das Rotorblatt (2) auf einem innenverzahnten Drehkranz (5) eines Wälzlagers (20) sitzt, das an der Rotornabe (1) abgestützt ist, und von einem koaxial mit dem Wälzlager (20) angeordneten Antriebsritzel (5) antreibbar ist, das auf einer Antriebswelle (16) sitzt, die über ein Antriebswellenlagergehäuse (17) an der Rotornabe (1) abgestützt ist.

18. Windkraftanlage mit einem Rotor (23) nach einem der beiden vorhergehenden Ansprüche.

## Claims

1. An actuator for adjusting the pitch angle of a rotor blade (2) of a wind turbine (3), which is rotatably mounted on a rotor hub (1), comprising a first drive element (4) connectable with the rotor blade (2), a second drive element (5) in meshing engagement with the first drive element (4), as well as a lubricating device (6) for lubricating the two drive elements (4, 5), wherein the lubricating device (6) has a lubricant passage (7) for the selective supply of lubricant to a zero tooth (8) of the first drive element (4) and/or a zero tooth (9) of the second drive element (5), which are in engagement with each other when the rotor blade (2) is in its preferred working position, and a supply control means (10) with a valve (12) in the lubricant passage (7) for controlling the supply of lubricant through the lubricant passage (7) in dependence on the engagement position of the two drive elements (4, 5), **characterized in that** the valve (12) includes a valve opener (13) which is movable between an open position and a closed position and protrudes in the region of the orifice of the lubricant passage (7), wherein at least at one of said zero teeth (8, 9) of the two drive elements (4, 5) an actuating cam (18) is provided for opening the valve (12).

2. The actuator according to the preceding claim, wherein the supply control means (10) includes an enabling switch (11), which enables the supply of lubricant through the lubricant passage (7) when said two drive elements (4, 5) are in engagement with each other with their zero teeth (8, 9), and which blocks the supply of lubricant through the lubricant passage (7) when said two zero teeth (8, 9) are out of engagement.

3. The actuator according to any of the preceding claims, wherein the valve opener (13) includes a valve tappet which extends in the lubricant passage (7) and protrudes from the same and opens the valve (12) by pressing into the lubricant passage (7).

4. The actuator according to any of the preceding claims, wherein the valve (12) is formed as check valve whose shut-off member (14) is urged towards the closed position of the valve by the lubricant pressure in the lubricant passage (7).

5. The actuator according to any of the preceding claims, wherein the lubricant passage (7) opens into a tooth base of the first and/or second drive element (4, 5).

6. The actuator according to any of the preceding claims, wherein the lubricant passage (7) is passed through the second drive element (5) and/or the supply control means (10, 12) is arranged in the second drive element (5).

7. The actuator according to the preceding claim, wherein the lubricant passage (7) can be brought in flow connection with a lubricant port (15) disposed on the end face of the second drive element (5).

8. The actuator according to any of the two preceding claims, wherein the lubricant passage (7) can be brought in flow connection with a lubricant port (15) provided on a drive shaft (16) and/or a drive shaft housing (17).

9. The actuator according to the preceding claim, wherein the lubricant passage (7) is passed through a drive shaft (16) and communicates with a drive shaft housing interior, in which bearings are accommodated for supporting the drive shaft (16).

10. The actuator according to any of the preceding claims, wherein the lubricant passage (7) is passed through a drive shaft bearing housing (17) or through the rotor hub (1) and/or opens on the end face onto the toothing of the two drive elements (4, 5).

11. The actuator according to any of the preceding claims, wherein the lubricant passage (7) is passed through the first drive element (4) and/or a bearing part (19) supporting the first drive element (4).

12. The actuator according to the preceding claim, wherein the lubricant passage (7) is passed through the first drive element (4) and the bearing ring (19) such that the corresponding lubricant passage portions (7a, 7b) are in flow connection with each other only in one rotary position of the first drive element (4) relative to the bearing part (19).

13. The actuator according to any of the preceding claims, wherein the first drive element (4) is a slewing ring and the second drive element (5) is a drive pinion extending inside the slewing ring.

14. The actuator according to any of the preceding claims, wherein the first drive element (4) forms a bearing ring of a rotary bearing (20), by means of which the rotor blade (2) can be supported on the rotor hub (1), wherein in particular the first drive element (4) forms the inner ring of the rotary bearing (20) and has an internal toothing with which the second drive element (5) meshes.

15. The actuator according to any of the preceding claims, wherein the second drive element (5) is seated on a drive shaft which is connectable with an actuator motor (21) and/or forms the motor shaft thereof.

16. A rotor for a wind turbine (3) with an actuator (22) according to any of the preceding claims.

17. The rotor according to the preceding claim, wherein the rotor blade (2) is seated on an internally toothed slewing ring (5) of a roller bearing (20) supported on the rotor hub (1), and can be driven by a drive pinion (5) arranged coaxially with the roller bearing (20), which is seated on a drive shaft (16) supported on the rotor hub (1) via a drive shaft bearing housing (17).

18. A wind turbine with a rotor (23) according to any of the two preceding claims.

## Revendications

1. Dispositif de réglage du pas d'une pale de rotor (2) montée rotative sur un moyeu de rotor (2) d'une éolienne (3), comprenant un premier élément d'entraînement (4) pouvant être relié à la pale de rotor (2), un second élément d'entraînement (5) se trouvant engrené avec le premier élément d'entraînement (4), ainsi qu'un dispositif de lubrification (6) pour la lubrification des deux éléments d'entraînement (4, 5), le dispositif de lubrification (6) présentant un canal de lubrifiant (7) pour l'alimentation ciblée de lubrifiant vers une dent zéro (8) du premier élément d'entraînement (4) et/ou une dent zéro (9) du second élément d'entraînement (5), qui ensuite s'engrènent l'une avec l'autre quand la pale de rotor (2) est dans sa position de travail privilégiée, ainsi qu'un dispositif de commande d'alimentation (10) avec une soupape (12) dans le canal de lubrifiant (7) pour commander l'alimentation en lubrifiant à travers le canal de lubrifiant (7) en fonction de la position d'engrenage des deux éléments d'entraînement (4, 5), **caractérisé en ce que** la soupape (12) présente un dispositif d'ouverture de soupape (13) qui est mobile entre une position d'ouverture et une position de fermeture et dépasse dans la zone de l'embouchure du canal de lubrifiant (7), une came de commande (18) pour l'ouverture de la soupape (12) étant prévue au moins sur l'une desdites dents zéro (8, 9) des deux éléments d'entraînement (4, 5).

2. Dispositif de réglage selon la revendication précédente, le dispositif de commande d'alimentation (10) présentant un dispositif de déblocage (11) qui débloque l'alimentation de lubrifiant à travers le canal de lubrifiant (7) quand lesdits deux éléments d'entraînement (4, 5) s'engrènent l'un avec l'autre avec leurs dents zéro (8, 9) mentionnées, et qui bloque l'alimentation de lubrifiant à travers le canal de lubrifiant (7) quand lesdites deux dents zéro (8, 9) ne sont pas en prise.

3. Dispositif de réglage selon l'une des revendications précédentes, le dispositif d'ouverture de soupape (13) présentant un poussoir de soupape, qui s'étend dans le canal de lubrifiant (7) et dépasse de celui-ci et ouvre la soupape (12) en s'enfonçant dans le canal de lubrifiant (7).

4. Dispositif de réglage selon l'une des revendications précédentes, la soupape (12) étant réalisée sous forme de soupape anti-retour dont le corps anti-retour (14) est soumis à l'action de la pression de lubrifiant dans le canal de lubrifiant (7) vers la position de fermeture de la soupape.

5. Dispositif de réglage selon l'une des revendications précédentes, le canal de lubrifiant (7) débouchant dans un pied de la dent du premier et/ou du second élément d'entraînement (4, 5).

6. Dispositif de réglage selon l'une des revendications précédentes, le canal de lubrifiant (7) passant à travers le second élément d'entraînement (5) et/ou le dispositif de commande d'alimentation (10, 12) étant disposé dans le second élément d'entraînement (5).

7. Dispositif de réglage selon la revendication précédente, le canal de lubrifiant (7) pouvant être amené en liaison d'écoulement avec un raccordement de lubrifiant (15) qui est disposé sur la face frontale du second élément d'entraînement (5).

8. Dispositif de réglage selon l'une des deux revendications précédentes, le canal de lubrifiant (7) pouvant être amené en liaison d'écoulement avec un raccordement de lubrifiant (15) qui est prévu sur un arbre d'entraînement (16) et/ou un carter d'arbre d'entraînement (17).

9. Dispositif de réglage selon la revendication précédente, le canal de lubrifiant (7) passant à travers un arbre d'entraînement (16) et communiquant avec un espace intérieur de carter d'arbre d'entraînement dans lequel des paliers sont reçus pour loger l'arbre d'entraînement (16).

10. Dispositif de réglage selon l'une des revendications précédentes, le canal de lubrifiant (7) passant à travers un carter de paliers d'arbre d'entraînement (17) ou le moyeu de rotor (1) et/ou débouchant côté face frontale sur la denture des deux éléments d'entraînement (4, 5).

11. Dispositif de réglage selon l'une des revendications précédentes, le canal de lubrifiant (7) passant à travers le premier élément d'entraînement (4) et/ou une partie de palier (19) logeant le premier élément d'entraînement (4).

12. Dispositif de réglage selon la revendication précédente, le canal de lubrifiant (7) passant à travers le premier élément d'entraînement (4) et la bague de roulement (19) de telle manière que les sections correspondantes (7a, 7b) de canal de lubrifiant sont en liaison d'écoulement les unes avec les autres uniquement dans une position de rotation du premier élément d'entraînement (4) par rapport à la partie de palier (19).

13. Dispositif de réglage selon l'une des revendications précédentes, le premier élément d'entraînement (4) étant une couronne d'orientation et le second élément d'entraînement (5) étant un pignon d'entraînement s'étendant à l'intérieur de la couronne d'orientation.

14. Dispositif de réglage selon l'une des revendications précédentes, le premier élément d'entraînement (4) formant une bague de roulement d'un palier de rotation (20) par lequel la pale de rotor (2) peut être logée sur le moyeu de rotor (1), le premier élément d'entraînement (4) formant en particulier la bague intérieure du palier de rotation (20) et présentant une denture intérieure avec laquelle le second élément d'entraînement (5) s'engrène.

15. Dispositif de réglage selon l'une des revendications précédentes, le second élément d'entraînement (5) étant placé sur un arbre d'entraînement, qui peut être relié à un moteur de commande (21) et/ou à l'arbre moteur de celui-ci.

16. Rotor pour une éolienne (3) avec un dispositif de réglage (22) selon l'une des revendications précédentes.

17. Rotor selon la revendication précédente, la pale de rotor (2) étant placée sur une couronne d'orientation (5) à denture intérieure d'un palier à roulement (20), qui est en appui sur le moyeu de rotor (1), et peut être entraînée par un pignon d'entraînement (5) disposé de manière coaxiale avec le palier à roulement (20), lequel pignon d'entraînement est placé sur un arbre d'entraînement (16) qui est en appui sur le moyeu de rotor (1) via un carter de palier d'arbre d'entraînement (17).

18. Éolienne comprenant un rotor (23) selon l'une des deux revendications précédentes.
